# EUROPEAN PATENT SPECIFICATION

(11) **EP 0 544 406 B1**
(45) Date of publication and mention of the grant of the patent: **04.10.1995**
(21) Application number: 92309773.7
(22) Date of filing: 26.10.1992
(51) Int. Cl.: F16D 65/04

(54) **Improved anchor in automatic transmission bands**
Anker für automatische Getriebebänder
Ancre pour bandes de transmission automatique

(30) Priority: 26.11.1991 US 798212
(43) Date of publication of application: 02.06.1993
(73) Proprietor: BORG-WARNER AUTOMOTIVE TRANSMISSION AND ENGINE COMPONENTS CORPORATION, Sterling Heights, Michigan 48311-8022 (US)
(72) Inventor: Grzesiak, Anthony J., Sauk Village, Illinois 60411 (US); Fenoglio, Robert J., Joliet, Illinois 60432 (US); Slager, Douglas J., Wheaton, Illinois 60187 (US)
(74) Representative: Allden, Thomas Stanley

(56) References cited:
- EP-A- 0 451 937
- EP-A- 0 464 995
- WO-A-91/11635

## Description

This invention relates to a transmission brake band for use in an automatic transmission.

In conventional vehicle automatic transmissions of the torque converter type, a driving shaft extends from the torque converter into the transmission housing to a unit having one or more clutch drums around which are arranged either single-wrap or double-wrap brake bands. It is the function of the brake band, through the function of suitable hydraulic controls to effect gear changes and also control the direction of rotation of the output shaft from the transmission to the differential for the driving wheels of the vehicle.

The present invention will be described in an embodiment intended to be utilized with a single-wrap brake band. However, the embodiment so described in this patent application is intended to be illustrative and is not intended to be limiting upon the use of this invention with transmission brake bands of all designs and styles.

Single-wrap brake bands are currently available in two distinct styles. The most commonly known single-wrap brake band is usually formed from a strip of sheet steel or similar material, having at its ends brackets formed from separate forgings, castings or stampings. The brackets are suitably secured to the strap material by spot welding or similar methods as shown in US-A-3 732 954. More recently, a unitary single-wrap brake band has been designed which utilizes a single piece of material wherein the brackets are extruded or formed from double thicknesses of the base metal at the ends of the strap member. An example of a brake band of this type of structure is disclosed in our EP-A-0 464 995.

Regardless of how the brake band and bracket members are formed, it is a requisite that each brake band have an actuation or apply end for receiving an apply piston and a reaction or anchor end which is operatively connected to a reaction member located in the transmission. Various types of automatic transmissions utilize different types of reaction members. Some reaction members may be of the tangential type which comprise a stationary plunger or stop member acting against the anchor end of the brake band, while other reaction members may be the reaction pin type where the pin extends perpendicular to the clutch drum and strap member and extends into a reaction opening located in the anchor bracket of the brake band.

Where a reaction pin is used as the reaction member in the transmission band, a "volcano" type reaction bracket is commonly provided to engage the reaction pin. A typical volcano bracket consists of an extruded opening extending radially outwardly from the reaction bracket of the band. Alternatively, a bushing secured to the bracket may have a reaction opening formed therein to receive the free end of the reaction pin, thus providing the anchored end of the brake band during use of the band in the automatic transmission. The opposite or apply end of the band is provided with an apply bracket for engaging the end of the apply plunger in the transmission that is hydraulically controlled to urge the band ends together and tighten the brake band around the clutch drum, thus stopping the rotation of the drum or otherwise altering the rotation of the drum or other member to change the gear ratio or alter the direction of rotation of the output shaft. Due to the close tolerances required for proper function between the free end of the reaction pin and the opening of the volcano, many problems have been encountered in which the volcano opening fails prematurely during testing or operation of transmission. For instance, if the reaction pin is not fully engaged with the volcano opening the open edges of the volcano may chip, splinter and crack.

Our aforementioned copending application EP-A-0 464 995 approaches the stress failure problems of such volcano brackets by providing a single piece brake band with an anchor embossment extruded from a double thickness of the strap material to produce a volcano type reaction bracket at one end of the brake band. The strap material is folded upon itself to form the double-layer and the volcano opening is formed by piercing the double layer of material to extrude the layers and form a tapered opening. The two layers of strap material are then secured together by clinch fastening, spot welding or other adequate means.

While the extruded volcano opening has provided for enhanced strength characteristics and has significantly reduced the number of stress failures in such volcano anchor brackets, it remains desirable to further reduce the risk of failure of volcano reaction openings. Problems with stress fractures and failures are still encountered, especially in situations where the reaction pin is not fully inserted through the volcano opening and forces are exerted at the upraised edges of the volcano opening.

Therefore, it is an object of this invention to provide a reaction bracket having enhanced strength characteristics to overcome the possibility of premature failures of the brake band. The present invention achieves this goal by increasing the strength of the bracket and reducing the stress on the volcano so that premature failure of the bracket is quantitatively lessened.

Another example of the prior art is featured in US-A-5083642 which generally discloses a transmission brake band for use in an automatic transmission, comprising an elongated strap member defining a generally annular interior circumference and having an apply bracket located at one end of the strap member and a reaction bracket located at the opposed end of the strap member, and a friction lining adhered to the interior circumference of the strap member, the reaction bracket having a generally domed configuration with a reaction opening formed therethrough, the domed configuration separating the reaction opening from the friction lining to create a hollow area therebetween.

More particularly, the brake band of US-A-5083642 is a double wrap brake band having its reaction bracket formed as a separate stamping from the elongated, annular strap member and secured thereto as by welding and/or by projections on the one deformably engaging apertures in the other. The apply bracket is also formed as a separate stamping and likewise secured to the strap member.

The stated object of the invention is achieved, in accordance with the present invention as claimed, in that the aforementioned generally disclosed brake band is characterized in that the apply bracket is integrally formed from said one end of the strap member, and the reaction bracket is integrally formed from the opposed end of the strap member, the domed configuration of the reaction bracket being formed from the strap member to define a pocket in the annular interior circumference of the strap member, the pocket constituting the hollow area between the reaction opening and the friction lining, the domed configuration and the pocket being closed about its periphery flush with the strap member, the reaction opening extending through the domed configuration into the pocket to define a longitudinal axis, and the portion of the strap material forming the domed configuration immediately surrounding the reaction opening extending in a generally perpendicular direction away from the longitudinal axis of the reaction opening.

In preparations for forming a preferred brake band utilizing the domed bracket of the present invention, a single strap of suitable metallic band material is provided. Both ends of the strap are bent upwardly and rearwardly over onto the strap member to form a double thickness of material at the ends of the strap. This area of double thickness is utilized to form the apply bracket at one end and the reaction bracket at the opposed end. Once the strap material has been folded upon itself, the double layer of material at the reaction end is pressed or formed to create a dome configuration and is pierced or punched to produce the reaction opening in the bracket. There is no extrusion of the layers of the strap material. Rather, the periphery of the strap material which forms the reaction opening after the punching step is generally aligned in parallel with the curvilinear surface of the remainder of the band. The dome portion surrounding the reaction opening places the strap material in a generally perpendicular relationship to the reaction pin as it is inserted in the reaction opening. Thus, the reaction opening is not a volcano and is not created from upwardly bent, stressed or extruded portions of the band material. Simultaneously, the two layers of material forming the bracket are secured together by commonly known methods such as clinch fastening or spot welding. The apply bracket for the band is further provided by any known method which allows for the end of the apply piston to engage and act to tighten the band around the clutch drum to apply the transmission band to the drum.

In order that the present invention may be well understood there will now be described two preferred embodiments thereof, given by way of example, reference being made to the accompanying drawings, in which
Fig. 1 is an elevated side view of a transmission brake band embodying the present invention;
Fig. 2 is a partial top plan view of the reaction bracket for the transmission brake band of Fig. 1;
Fig. 3 is a sectional view taken along line 3-3 of Fig. 2;
Fig. 4 is an elevational side view of an alternative embodiment of the transmission brake band of the present invention;
Fig. 5 is a top plan view of the reaction bracket of the transmission brake band of Fig. 4; and,
Fig. 6 is a sectional view taken along lines 6-6 of Fig. 5.

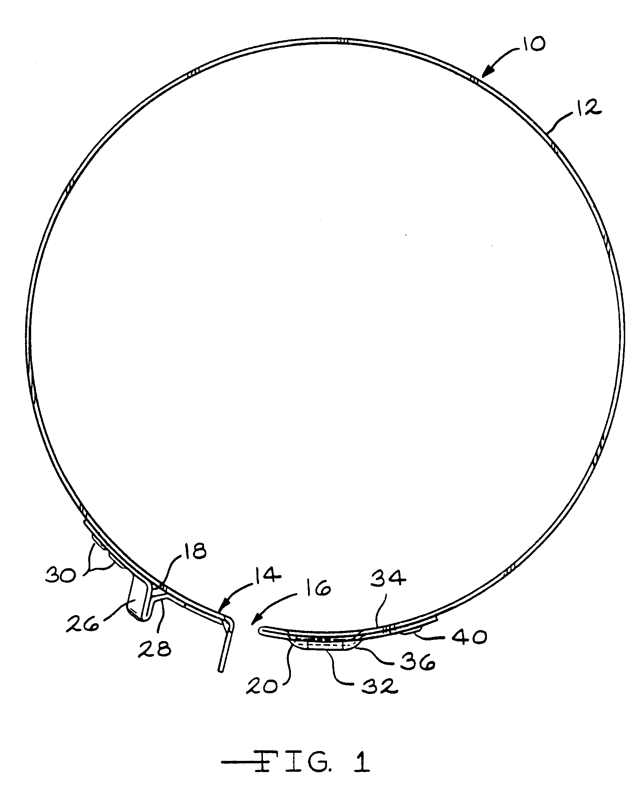

Whilst the invention will be described with regard to Figs. 1-6 which all reference a one-piece single-wrap brake band, it is not intended that this description of the invention in use with a single-wrap one-piece brake band be necessarily limiting upon the envisioned range of embodiments for the present invention.

Referring now to Figs. 1-3, a first embodiment of the present invention discloses a one-piece brake band, generally designed by the reference numeral 10, for use in a vehicle automatic transmission (not shown) which is formed from an elongated strap of material 12 defining a curved band 12 of determinate length. The opposed ends 14, 16 of the strap 12 are folded over and rearwardly back upon the strap 12 to create bracket members 18, 20, designed to engage an apply piston (not shown) and a reaction pin 22, respectively. The brake band 10 further includes a friction lining (not shown) suitably secured thereto by any acceptable method of adhesion.

The apply bracket member 18 may be formed in any acceptable manner. The apply bracket shown in Fig. 1 is formed by folding the end 14 into a upwardly folded ridge 26 having a strengthening rib 28 on the side of the fold located below the contact point for an apply piston or pin. The folded ridge 26 may or may not include a depressed area (not shown) intended to form a pocket in the central area of the side opposite the strengthening rib 28. The depressed area is adapted to engage the end of the apply piston acting in a generally tangential direction to the clutch drum. The end 14 with ridge 26 and strengthening rib 28 are folded over the strap 12 and secured to the strap, preferably in a simultaneous manufacturing step with the folding and forming operation, by commonly accepted methods such as clinch fastening 30.

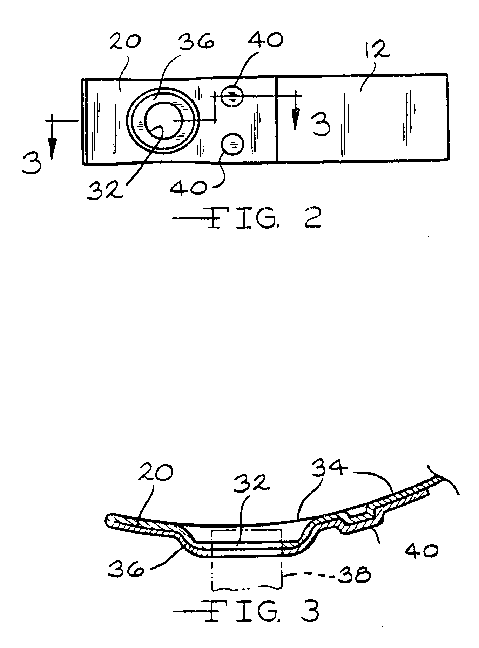

Referring now to Figs. 2 and 3, the present invention primarily resides in the end 16 which forms the bracket reaction member 20. The end 16 is formed by folding the strap member 12 upwardly and rearwardly upon itself. A reaction pin opening 32 is punched or pierced through both layers of strap material from the interior strap surface 34 and an annular peripheral dome 36 is formed surrounding the opening 32. Thus, the reaction pin, shown in ghost as 38, engages both layers of the strap material formed in the dome 36 at the reaction opening 32. There is no extrusion of the strap material at the point of engagement with the reaction pin or anchor pin 38. Therefore, the full strength of the double layer of strap material 12 is utilized to anchor the brake band 10 against movement induced by the apply pin against the apply bracket member 18. The surface 37 of the dome 36 immediately proximate the reaction opening 32 is preferably aligned in a generally parallel relationship with the curvilinear surface of the strap member 12. Thus the layers of strap material that act to engage the anchor pin 38 line generally perpendicular to the axis of the anchor pin 38 and, therefore, provide for enhanced bracket 20 strength against the forces applied by the pin 38 to the reaction opening 32. The reaction bracket member 20 is fastened to the strap 12 by clinched fasteners 40 which are similar to the fasteners 30 utilized with the apply bracket. Although clinched fasteners are shown, the layers could also be spot welded together if desired.

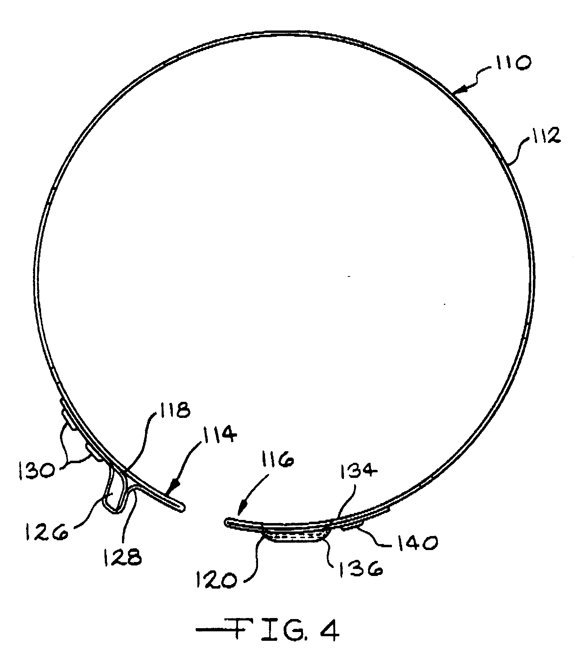

Referring now to Figs. 4-6, an alternative embodiment of the present invention discloses a one-piece brake band, generally designated by the reference numeral 110, for use in a vehicle automatic transmission (not shown) which is formed from an elongated strap of material 112 defining a curved band 112 of determinate length. The opposed ends 114, 116 of the strap 112 are folded over and rearwardly back upon the strap 112 to create bracket members 118, 120, designed to engage an apply piston (not shown) and a reaction pin 122, respectively. The brake band 110 further includes a friction lining (not shown) suitably secured thereto by any acceptable method of adhesion.

The apply bracket member 118 may be formed in any acceptable manner. The apply bracket shown in Fig. 4 is formed by folding the end 114 into an upwardly folded ridge 126 having a strengthening rib 128 on the side of the fold located below the contact point for an apply piston or pin. The folded ridge 126 may or may not include a depressed area (not shown) intended to form a pocket in the central area of the side opposite the strengthening rib 128. The depressed area is adapted to engage the end of the apply piston acting in a generally tangential direction to the clutch drum. The end 114 with ridge 126 and strengthening rib 128 are folded over the strap 112 and secured to the strap, preferably in a simultaneous manufacturing step with the folding and forming operation, by commonly accepted methods such as clinch fastening 130.

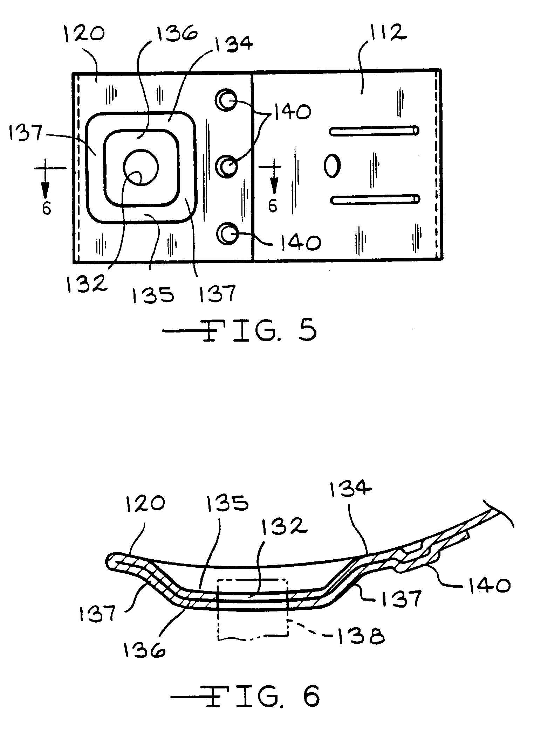

Figs. 5-6 detail the alternative embodiment of the reaction bracket member 120. In this embodiment of the brake band 110 the reaction bracket member is generally formed as a four sided dome 136 surrounding the reaction pin opening 132. The dome 136 is formed to have two sides 135 extending generally parallel with the length of the strap 112 and two sides 137 extending transverse to the length of the strap 112. It has been found that the four sided dome provides even greater enhanced strength characteristics in engaging the reaction pin 138.

The pierced dome reaction bracket of the present invention provides for greater latitude in positioning of the reaction pin within the reaction opening and further, provides for greater strength in retaining the reaction pin in position without premature failure of the brake band.

## Claims

1. A transmission brake band for use in an automatic transmission, comprising an elongated strap member (12; 112) defining a generally annular interior circumference (34; 134) and having an apply bracket (18; 118) located at one end (14; 114) of the strap member (12; 112) and a reaction bracket (20; 120) located at the opposed end (16; 116) of the strap member (12; 112), and a friction lining adhered to the interior circumference (34; 134) of the strap member (12; 112), the reaction bracket (20; 120) having a generally domed configuration (36; 136) with a reaction opening (32; 132) formed therethrough, the domed configuration (36; 136) separating the reaction opening (32; 132) from the friction lining (24; 124) to create a hollow area therebetween; characterized in that the apply bracket (18; 118) is integrally formed from said one end (14; 114) of the strap member (12; 112), and the reaction bracket (20; 120) is integrally formed from the opposed end (16; 116) of the strap member (12; 112), the domed configuration (36; 136) of the reaction bracket (20; 120) being formed from the strap member (12; 112) to define a pocket in the annular interior circumference (34; 134) of the strap member (12; 112), the pocket constituting the hollow area between the reaction opening (32; 132) and the friction lining, the domed configuration (36; 136) and the pocket being closed about its periphery flush with the strap member (12; 112), the reaction opening (32; 132) extending through the domed configuration (36; 136) into the pocket to define a longitudinal axis, and the portion of the strap material forming the domed configuration (36; 136) immediately surrounding the reaction opening (32; 132) extending in a generally perpendicular direction away from the longitudinal axis of the reaction opening (32; 132).

2. A brake band as claimed in claim 1, wherein the opposed end (16; 116) of the strap member (12; 112) is folded back upon itself to create a completely engaged double thickness of the strap material at said opposed end (16; 116) from which double thickness strap material the reaction bracket (20; 120) is formed.

3. A brake band as claimed in claim 1 or claim 2, wherein said one end (14; 114) of the strap member (12; 112) is folded back upon itself to create a double thickness of the strap material at said one end (14; 114) from which double thickness strap material the apply bracket (18; 118) is formed.

4. A brake band as claimed in any of the preceding claims, wherein the domed configuration (36; 136) immediately surrounding the periphery of the reaction opening (32; 132) is in a generally parallel relationship with the interior circumference (34; 134) created by the strap member (12; 112).

5. A brake band as claimed in any of the preceding claims, wherein the domed configuration (36) immediately surrounding the periphery of the reaction opening (32) has a circumference spaced equidistantly around the reaction opening (32).

6. A brake band as claimed in any of claims 1 to 4, wherein the domed configuration (136) immediately surrounding the periphery of the reaction opening (132) is of a generally square configuration having two sides (135) of the dome (136) generally parallel to the edges of the strap member (112) and the remaining two sides (137) of the dome (136) generally perpendicular to the edges of the strap member (112).

## Patentansprüche

1. Getriebe-Bremsband zur Verwendung in einem automatischen Getriebe, mit einem länglichen Bandkörper (12;112), der einen allgemein ringförmigen inneren Umfang (34;134) definiert, und mit einem Einrück-Befestigungsteil (18;118), das an einem Ende (14;114) des Bandkörpers (12;112) angeordnet ist, und einem Reaktions-Befestigungsteil (20;120), das an dem entgegengesetzten Ende (16;116) des Bandkörpers (12;112) angeordnet ist, und einem Reibbelag, der an dem inneren Umfang (34;134) des Bandkörpers (12;112) haftend angebracht ist, wobei das Reaktions-Befestigungsteil (20;120) eine allgemein domartige Konstellation (36;136) mit einer durchgehenden Reaktionsöffnung (32;132) besitzt, die domartige Konfiguration (36;136) die Reaktionsöffnung (32;132) gegenüber dem Reibbelag (24;124) trennt, um dazwischen einen hohlen Bereich zu erzeugen, dadurch gekennzeichnet, daß das Einrück-Befestigungsteil (18;118) von dem besagten einen Ende (14;114) des Bandkörpers (12;112) aus einstückig ausgebildet ist und das Reaktions-Befestigungsteil (20;120) von dem entgegengesetzten Ende (16;116) des Bandkörpers (12;112) aus einstückig ausgebildet ist, die domartige Konfiguration (36;136) des Reaktionsbefestigungsteils (20;120) aus dem Bandkörper (12;112) geformt ist, um eine Tasche in dem ringförmigen inneren Umfang (34;134) des Bandkörpers (12;112) zu bilden, die Tasche den hohlen Bereich zwischen der Reaktionsöffnung (32;132) und dem Reibbelag bildet, die domartige Konfiguration (36;136) und die Tasche um ihren Umfang herum fluchtend zu dem Bandkörper (12;112) geschlossen ist, die Reaktionsöffnung (32;132) durch die domartige Konstellation (36;136) in die Tasche verläuft, um eine Längsachse zu definieren, und der die domartige Konfiguration (36;136) bildende Abschnitt des Bandmaterials, der die Reaktionsöffnung (32;132) unmittelbar umgibt, in im wesentlicher senkrechter Richtung weg von der Längsachse der Reaktionsöffnung (32;132) verläuft.

2. Bremsband nach Anspruch 1, bei dem das entgegengesetzte Ende (16;116) des Bandkörpers (12;112) auf sich selbst zurückgefaltet ist, um eine vollständig erfaßte zweifache Dicke des Bandmaterials an dem entgegengesetzten Ende (16;116) zu erzeugen, aus welchem Bandmaterial zweifacher Dicke das Reaktions-Befestigungsteil (20;120) gebildet ist.

3. Bremsband nach Anspruch 1 oder 2, bei dem das besagte eine Ende (14;114) des Bandkörpers (12;112) auf sich selbst zurückgefaltet ist, um eine zweifache Dicke des Bandmaterials an dem besagten einen Ende (14;114) zu erzeugen, aus welchem Bandmaterial doppelter Dicke das Einrück-Befestigungsteil (18;118) gebildet ist.

4. Bremsband nach einem der vorhergehenden Ansprüche, bei dem die domartige Konfiguration (36;136), die den Umfang der Reaktionsöffnung (32;132) unmittelbar umgibt, im wesentlichen parallel zu dem von dem Bandkörper (12;112) gebildeten inneren Umfang (34;134) verläuft.

5. Bremsband nach einem der vorhergehenden Ansprüche, bei dem die domartige Konfiguration (36), die den Umfang der Reaktionsöffnung (32) unmittelbar umgibt, einen Umfang hat, der mit gleichem Abstand die Reaktionsöffnung (32) umgibt.

6. Bremsband nach einem der Ansprüche 1 bis 4, bei dem die domartige Konfiguration (136), die den Umfang der Reaktionsöffnung (132) unmittelbar umgibt, eine allgemein quadratische Konfiguration hat, wobei zwei Seiten (135) des Doms (136) allgemein parallel zu den Rändern des Bandkörpers (112) und die übrigen zwei Seiten (137) des Doms (136) allgemein senkrecht zu den Rändern des Bandkörpers (112) verlaufen.

## Revendications

1. Bande de frein de transmission destinée à être utilisée dans une transmission automatique, comprenant un élément de bande allongée (12 ; 112) définissant une circonférence intérieure généralement annulaire (34 ; 134) et comportant une patte de serrage (18 ; 118) située au niveau d'une première extrémité (14 ; 114) de l'élément de bande (12 ; 112) et une patte de réaction (20 ; 120) située à l'extrémité opposée (16 ; 116) de l'élément de bande (12 ; 112), et une garniture de friction collée à la circonférence intérieure (34 ; 134) de l'élément de bande (12 ; 112), la patte de réaction (20 ; 120) ayant une configuration généralement en dôme (36 ; 136) avec une ouverture de réaction (32 ; 132) formée à travers celle-ci, la configuration en dôme (36 ; 136) séparant l'ouverture de réaction (32 ; 132) de la garniture de friction (24 ; 124) afin de créer une zone creuse entre celles-ci, caractérisée en ce que la patte de serrage (18 ; 118) est formée de manière intégrale à partir de ladite première extrémité (14 ; 114) de l'élément de bande (12 ; 112), et la patte de réaction (20 ; 120) est formée de manière intégrale à partir de l'extrémité opposée (16 ; 116) de l'élément de bande (12 ; 112), la configuration en dôme (36 ; 136) de la patte de réaction (20 ; 120) étant formée à partir de l'élément de bande (12 ; 112) afin de définir une poche dans la circonférence intérieure annulaire (34 ; 134) de l'élément de bande (12 ; 112), la poche constituant la zone creuse entre l'ouverture de réaction (32 ; 132) et la garniture de friction, la configuration en dôme (36 ; 136) et la poche étant fermées autour de sa périphérie à fleur de l'élément de bande (12 ; 112), l'ouverture de réaction (32 ; 132) s'étendant à travers la configuration en dôme (36 ; 136) dans la poche afin de définir un axe longitudinal, et la partie du matériau en bande formant la configuration en dôme (36 ; 136) entourant immédiatement l'ouverture de réaction (32 ; 132) en s'étendant dans une direction généralement perpendiculaire à l'axe longitudinal de l'ouverture de réaction (32 ; 132).

2. Bande de frein selon la revendication 1, dans laquelle l'extrémité opposée (16 ; 116) de l'élément de bande (12 ; 112) est repliée vers l'arrière sur elle-même afin de créer une double épaisseur entièrement en contact du matériau de bande au niveau de ladite extrémité opposée (16 ; 116), matériau de bande en double épaisseur à partir duquel est formée la patte de réaction (20 ; 120).

3. Bande de frein selon la revendication 1 ou la revendication 2, dans laquelle ladite première extrémité (14 ; 114) de l'élément de bande (12 ; 112) est repliée vers arrière sur elle-même afin de créer une double épaisseur du matériau de bande au niveau de ladite première extrémité (14 ; 114), matériau en bande en double épaisseur à partir duquel est formée la patte de serrage (18 ; 118).

4. Bande de frein selon l'une quelconque des revendications précédentes, dans laquelle la configuration en dôme (36 ; 136) entourant immédiatement la périphérie de l'ouverture de réaction (32 ; 132) est en relation généralement parallèle avec la circonférence intérieure (34 ; 134) créée par l'élément de bande (12 ; 112).

5. Bande de frein selon l'une quelconque des revendications précédentes, dans laquelle la configuration en dôme (36) entourant immédiatement la périphérie de l'ouverture de réaction (32) présente une circonférence espacée de manière équidistante autour de l'ouverture de réaction (32).

6. Bande de frein selon l'une quelconque des revendications 1 à 4, dans laquelle la configuration en dôme (136) entourant immédiatement la périphérie de l'ouverture de réaction (132) est de configuration généralement carrée comportant deux côtés (135) du dôme (136) généralement parallèles aux bords de l'élément de bande (112) et les deux côtés restants (137) du dôme (136) généralement perpendiculaires aux bords de l'élément de bande (112).
